# EUROPEAN PATENT SPECIFICATION

(11) **EP 2 638 185 B1**
(45) Date of publication and mention of the grant of the patent: **26.01.2022**
(21) Application number: 11840040.7
(22) Date of filing: 03.11.2011
(51) Int. Cl.: C23F 11/02, C09K 5/10

(54) **NOVEL VAPOR SPACE ANTICORROSIVE COMPOSITION**
NEUE ROSTSCHUTZZUSAMMENSETZUNG FÜR EINEN DAMPFRAUM
NOUVELLE COMPOSITION ANTICORROSIVE D'ESPACE VAPEUR

(30) Priority: 10.11.2010 EP 10190743
(43) Date of publication of application: 18.09.2013
(73) Proprietor: BASF SE, 67056 Ludwigshafen am Rhein (DE)
(72) Inventor: Dietl, Harald, 67063 Ludwigshafen (DE); Nitzschke, Uwe, 67071 Ludwigshafen (DE)
(74) Representative: BASF IP Association
(86) International application number: PCT/IB2011/054876
(87) International publication number: WO 2012/063164

(56) References cited:
- EP-A1- 1 111 092
- GB-A- 2 437 655
- US-A- 4 711 735
- US-A- 4 711 735
- US-A1- 2004 029 754
- US-A1- 2004 029 754
- US-A1- 2004 211 937
- US-A1- 2005 040 362
- US-A1- 2009 057 615
- US-A1- 2010 116 473
- US-B1- 6 787 065
- DATABASE CAPLUS, [Online] 31 May 1990 (1990-05-31), POLAK DANUTA ET AL: "Corrosion inhibitor especially for protection of wet sand-blasted metal surfaces", XP002002374, retrieved from CAPLUS; STN Database accession no. 1991-252227

## Description

The present invention relates to vapor space anticorrosive compositions comprising at least one corrosion inhibitor and at least one thickener.

Furthermore, vapor space anticorrosive compositions comprising at least one ethoxylate of castor oil have been found.

Furthermore, the use of the vapor space anticorrosive compositions as engine running-in compositions or in a coolant has been found.

Corrosion protection of objects has to meet evermore demanding requirements. At the same time, corrosion protection has not been satisfactorily solved for numerous applications. In particular, corrosion protection of objects which have hollow spaces is in need of improvement.

Particular problems occur when an object comes into contact with a liquid or the liquid is drained or removed. Afterward, the object is often exposed to air without protection and corrodes. The corrosion is frequently promoted by residues of the liquid which remain in the object concerned and can form a corrosive atmosphere.

This applies, inter alia, to engines which are briefly filled with engine running-in compositions for test operation. Coolant is in practice frequently used as engine running-in composition. After conclusion of the test, the engine running-in composition is drained again, A relatively small proportion of the engine running-in composition generally remains in the system. This accelerates corrosion of the engine in the vapor space which can corrode without protection.

EP 1 111 092 A1 describes aqueous coolants comprising salts of benzoic acids for the running-in phase of engines and their use as vapor space corrosion inhibitor.

WO 02/051957 (US 2004/029754 A1) describes aqueous coolants comprising ammonium salts of a C₁-C₄-monocarboxylic or -dicarboxylic acid which may have one or more OH substituents and their use as vapor space corrosion inhibitor.

US 2010/0116473 A1 discloses an aqueous coolant for internal combustion engines. Ammonium salts of C1-C₄-mono- and dicarboxylic acids are used as vapor space corrosion inhibitors in aqueous coolants in the run-in phase of internal combustion engines, where the coolant is discharged from the engine cooling circuit after the run-in phase. The coolants used may contain the conventional accompanying substances and assistants such as polyacrylates.

US 4711735 A1 discloses a corrosion inhibitor composition consisting of an aqueous compositional corrosion inhibitor system, with the corrosion inhibitor system including ricinoleic acid.

Both, US 2010/0116473 A1 as well as US 4711735 A1, are silent about ethoxylated castor oil and its use as corrosion inhibitor

XP002002374 discloses a corrosion inhibiting composition for metal surfaces comprising *inter alia* ethoxylated castor oil and ethylene oxide-propylene oxide copolymer nonylphenyl ether. The corrosion inhibitor is used as such or in the form of an aqueous emulsion containing 1-20 wt.% of inhibitor.

US 2009/0057615 A1 discloses corrosion inhibitor mixtures comprising an ethoxylated of castor oil with 20 moles of ethylene oxide, N-cocoyl-DLmethionine sodium salt, respectively, N-oleoyl-DLmethionine potassium salt, butylglycol and water. The corrosion inhibiting compositions are tested in aqueous acidic solutions for steel coupons.

It was an object of the present invention to provide vapor space anticorrosive compositions which have improved vapor space corrosion-inhibiting properties, can be handled easily and provide good corrosion protection even after the major part of the medium comprising the vapor space anticorrosive composition has been drained or removed.

We have accordingly found the above-described vapor space anticorrosive compositions comprising at least one ethoxylate of castor oil as a corrosion inhibitor and at least one thickener, wherein the vapor space anticorrosive composition has non-Newtonian properties and wherein the thickener comprises at least one polyacrylate and at least one surfactant.

Vapor space anticorrosive compositions are also denoted as vapor phase anticorrosion fluids.

The term vapor space refers to the space in a hollow body which is located above a liquid or is physically connected to the space via a liquid.

Suitable corrosion inhibitors are all materials which can reduce or completely prevent corrosion of objects.

Suitable objects which can be protected by means of the vapor space anticorrosive composition of the invention can be made entirely or partly of any materials which can be subject to corrosion. Suitable objects can be made, for example, of metal, plastics, wood or cellulose.

Suitable objects are preferably made entirely or partly of metal. In many cases, the metal of which the suitable objects are made comprises iron, steel, aluminum, magnesium, titanium, vanadium, chromium, manganese, cobalt, nickel, copper, zinc, molybdenum or tungsten. Particularly suitable objects are entirely or partly made of metal comprising iron.

In a preferred embodiment of the invention, suitable objects have at least one hollow space which is not completely filled with a liquid.

In a particularly preferred embodiment, suitable objects have at least one hollow space which entirely or partly has a metallic surface.

The vapor space anticorrosive composition of the invention comprises at least one ethoxylate of castor oil as a corrosion inhbitor. One class of further suitable corrosion inhibitors is, for example, salts of benzoic acids.

Preference is given to ammonium salts or salts of alkali metals or alkaline earth metals. Particular preference is given to sodium or ammonium salts. The anions of benzoic acid can be those of unsubstituted or substituted benzoic acid. Examples of substituents on the aromatic ring of benzoic acid are alkyl radicals, in particular methyl, ethyl, n-propyl, isopropyl, n-butyl, tert-butyl, isobutyl. These groups may optionally be substituted further.

The benzoic acid can be monosubstituted or bear a plurality of substituents. Preference is given to unsubstituted benzoic acid or monosubstituted benzoic acid.

Another class of further suitable corrosion inhibitors is ammonium salts of monocarboxylic or dicarboxylic acids. Preference is given to ammonium salts of C₁-C₁₂-monocarboxylic or
- dicarboxylic acids. Particular preference is given to salts of C₄-C₁₂-monocarboxylic or
- dicarboxylic acids. The monocarboxylic or dicarboxylic acids can comprise one or more substituents. In particular, they can have one or more OH groups.

A further class of further suitable corrosion inhibitors is nitrogen-heterocyclic compounds which are preferably aromatic. Suitable nitrogen-heterocyclic compounds can bear one or more substituents. In a preferred variant, they are fused with other aromatic rings.

Preferred nitrogen-heterocyclic compounds are, for example, azoles. Particular preference is given to triazoles or thiazoles.

Examples of suitable azoles are benzoazoles and toluazoles.

Examples of suitable triazoles are benzotriazole and tolutriazole.

Examples of suitable thiazoles are benzothiazoles and 2-mercaptobenzothiazoles.

Further suitable corrosion inhibitors are phosphates. These are first and foremost salts of phosphoric acid. Suitable phosphates are formed, for example, by adjusting the pH of an aqueous solution of phosphoric acid by means of bases. In principle, all bases which form soluble salts in the anticorrosive composition are suitable for adjusting the pH. Preferred bases are alkali metal hydroxides such as sodium or potassium hydroxide. Phosphates are preferred as corrosion inhibitor when, inter alia, particularly low-lime water is employed during use.

Further suitable corrosion inhibitors are nitrites such as sodium or potassium nitrite. Phosphates are frequently combined with nitrates.

Water-soluble secondary or tertiary amines are likewise suitable as further corrosion inhibitors Examples of this class of corrosion inhibitors are diethanolamine and triethanolamine.

In one embodiment, vapor space anticorrosive compositions according to the invention comprise at least one corrosion inhibitor which in the system with the other constituents has a phase inversion temperature T_{P}. This means that the constituents are present in solution below the phase inversion temperature, but form a second liquid phase above the phase inversion temperature. The phase inversion temperature is characterized by the temperature at which turbidity appears on heating the vapor space anticorrosive composition. This is also referred to as cloud point.

Such corrosion inhibitors surprisingly provide improved corrosion protection, In general, the corrosion inhibitor is selected so that the phase inversion temperature is below or approximately equal to the temperature reached by the vapor space anticorrosive composition during use.

If vapor space anticorrosive compositions according to the invention are used as engine running-in compositions, a suitable phase inversion temperature is, for example, from 50 to 100°C, preferably from 70 to 90°C, in each case determined in accordance with DIN 53917.

Examples of further corrosion inhibitors which have a phase inversion temperature in aqueous vapor space anticorrosive compositions are, for example, esters of polyhydric alcohols and carboxylic acids. Suitable polyhydric alcohols are, for example, diols, triols or tetrols, which may optionally be alkoxylated and can have been produced petrochemically or on the basis of renewable raw materials, Suitable esters generally have a molar mass of not more than 10 000 g/mol, preferably less than 5000 g/moland particularly preferably less than 2000 g/mol. In one embodiment, suitable esters still bear unesterified alcohol or carboxylic acid groups.

Further suitable corrosion inhibitors are polyethers of fatty alcohols, These can have been produced entirely petrochemically or entirely or partially on the basis of renewable raw materials. In general, they are alkoxylates, preferably ethoxylates. Vapor space anticorrosive compositions according to the invention particularly preferably comprise polyethers of fatty alcohols which comprise from 2 to 200 mol of ethylene oxide per mole. In particular, polyethers of fatty alcohols comprise from 4 to 100 mol of EO per mole or from 5 to 60 mol of EO per mole. Polyethers of fatty alcohols can also comprise further alkylene oxides such as propylene oxide, butylene oxide or styrene oxide in varying amounts in addition to ethylene oxide. In general, suitable polyethers of fatty alcohols have hydroxyl numbers in accordance with DIN 53240 of from 10 to 500, preferably from 20 to 200. In one embodiment, the hydroxyl number is from 30 to 100, in another embodiment from 110 to 180.

The corrosion inhibitor which has a phase inversion temperature in aqueous vapor space anticorrosive compositions is ethoxylated castor oil Vapor space anticorrosive compositions according to the invention particularly preferably comprise ethoxylated castor oil comprising from 2 to 200 mol of ethylene oxide (EO) per mole. In particular, ethoxylated castor oil comprises from 4 to 100 mol of EO per mole or from 5 to 60 mol of EO per mole. Alkoxylated castor oil can also comprise further alkylene oxides such as propylene oxide, butylene oxide or styrene oxide in varying amounts in addition to ethylene oxide. The solubility in water and the phase inversion temperature can be influenced via the degree of alkoxylation of the castor oil and optionally the ratio of the various alkylene oxides.

Vapor space anticorrosive compositions according to the invention frequently comprise additives which stabilize the pH and thus likewise contribute to inhibition of corrosion. In one embodiment, vapor space anticorrosive compositions according to the invention comprise, for example, borax.

Vapor space anticorrosive compositions according to the invention can either comprise only one corrosion inhibitor, but more frequently comprise a combination of various corrosion inhibitors.

In a preferred embodiment, triazoles are combined with aliphatic and/or aromatic monocarboxylic/dicarboxylic acids or derivatives thereof and also borax.

In another embodiment, benzoates and salicylates are combined with triethanolamine. The proportion of the at least one corrosion inhibitor in the vapor space anticorrosive composition can vary within wide limits. In choosing the amount of the at least one corrosion inhibitor, it is necessary to take into account, inter alia, the type of corrosion inhibitor, the properties of the object to be protected and especially the application in which the vapor space anticorrosive composition is to be used.

If vapor space anticorrosive compositions according to the invention are used as coolant or engine running-in composition, the vapor space anticorrosive composition typically comprises from 0.1 to 10% by weight of corrosion inhibitor during use. Preference is given to from 0.2 to 5% by weight, particularly preferably from 0.3 to 1% by weight. In one embodiment, from 0.25 to 0.5% by weight are present, in another from 0.45 to 0.8% by weight.

It is possible for the vapor space anticorrosive composition of the invention to be provided as concentrate which has a significantly higher proportion of corrosion inhibitors and is then diluted with water or other solvents before use.

The vapor space anticorrosive composition of the invention comprises at least one polyacrylate as a thickener. Thickeners are generally high molecular weight substances which increase the viscosity of a liquid.

In general, suitable thickeners as a 0.5% strength by weight solution in water have a viscosity at 20°C of at least 50 mPas, preferably 500 mPas, particularly preferably 2000 mPas and in particular at least 5000 mPas (dynamic viscosity, determined as specified in ASTM D 4016-08. All viscosities in the present text are as determined in accordance with ASTM D 4016-08 and the manual "Viskositatsmessungen mit Brookfield, Brookfield Engineering Labs. Vertriebs GmbH 9/99". ASTM D 4016-08 describes a method of determining viscosities of chemical grouts, which has been applied to the present vapor space anticorrosive compositions. Viscosities which have been determined experimentally in the context of the present invention were all measured on a Brookfield LV DV III + instrument with small sample adapter and a type SC4-34 spindle).

However, the viscosity of the aqueous 0.5% strength by weight solution is typically not more than 50 000 mPas

The choice of thickener depends on the use, the desired viscosity range, the use temperature and the solvent which is to be thickened. The type of thickener is not critical for carrying out the invention as long as the thickener system does not undergo any undesirable interaction with the corrosion inhibitor, the object to be protected or any other constituents present.

Examples of further suitable thickeners are, for example, described in Kittel, Lehrbuch der Lacke und Beschichtungen, volume 4, 2nd edition 2007, pp.285 to 316.

Preferred synthetic thickeners are homopolymers or copolymers comprising acrylic acid. Such polymers will also be referred to as polyacrylates in the present patent application.

In general, suitable polyacrylates are weakly crosslinked.

Particularly preferred thickeners are polyacrylates comprising acrylic acid and acrylamide.

Very particularly preferred synthetic thickeners are selected from among copolymers comprising from 85 to 95% by weight of acrylic acid, from 4 to 14% by weight of acrylamide and from 0.01 to 1% by weight of the (meth)acrylamide derivative of the formula 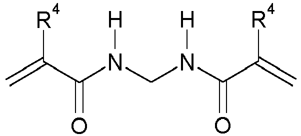 where the radicals R⁴ can be identical or different and can each be methyl or hydrogen.

Suitable synthetic thickeners generally have molecular weights M_{w} in the range from 50 000 to 3 000 000 g/mol, preferably from 100 000 to 2 000 000 g/mol, particularly preferably from 200 000 to 1 000 000 g/mol (determination: gel permeation chromatography using polystyrene as standard).

Suitable thickeners in neat form are generally solid. However, they can be used as solution or as dispersion, for example in water.

It is not necessary for the thickeners used to dissolve completely in the other constituents of the vapor space anticorrosive composition at room temperature. The vapor space anticorrosive compositions of the invention are also effective when they have a plurality of phases.

However, it is advantageous for the thickeners used to be able to be stirred readily into the vapor space anticorrosive composition. The thickeners are frequently stirred in at slightly acidic pH, for example at a pH of from 3 to 4.

Furthermore, associative thickeners are suitable as thickeners. Associative thickeners comprise not only hydrophilic groups but also hydrophobic end or side groups in the molecule. Associative thickeners have surfactant character and are generally capable of forming micelles.

Suitable associative thickeners are, for example, hydrophobically modified polyacrylates.

The thickener system comprises at least one polyacrylate with at least one surfactant. Suitable polyacrylates for such a thickener correspond to the polyacrylates disclosed above.

As surfactants, it is possible to use anionic, cationic and nonionic surfactants. However, preference is given to nonionic surfactants.

Particularly suitable nonionic surfactants are based on polyethers.

Apart from unmixed polyalkylene oxides, preferably C₂-C₄-alkylene oxides and phenylsubstituted C₂-C₄-alkylene oxides, in particular polyethylene oxides, polypropylene oxides and poly(phenylethylene oxides), block copolymers, in particular polymers comprising polypropylene oxide and polyethylene oxide blocks or poly(phenylethylene oxide) and polyethylene oxide blocks, and also random copolymers of these alkylene oxides are especially suitable here.

These polyalkylene oxides can be prepared by polyaddition of the alkylene oxides onto starter molecules such as saturated or unsaturated aliphatic and aromatic alcohols, saturated or unsaturated aliphatic and aromatic amines, saturated or unsaturated aliphatic carboxylic acids and carboxamides. It is usual to use from 1 to 300 mol, preferably from 3 to 150 mol, of alkylene oxide per mole of starter molecule.

Suitable aliphatic alcohols generally have from 6 to 26 carbon atoms, preferably from 8 to 18 carbon atoms, and can have an unbranched, branched or cyclic structure. Examples which may be mentioned are octanol, nonanol, decanol, isodecanol, undecanol, dodecanol, 2-butyloctanol, tridecanol, isotridecanol, tetradecanol, pentadecanol, hexadecanol (cetyl alcohol), 2-hexyldecanol, heptadecanol, octadecanol (stearyl alcohol), 2-heptylundecanol, 2-octyldecanol, 2-nonyltridecanol, 2-decyltetradecanol, oleyl alcohol and 9-octadecenol and also mixtures of these alcohols, e.g. C₈/C₁₀-, C₁₃/C₁₅- and C₁₆/C₁₈-alcohols, and cyclopentanol and cyclohexanol. The saturated and unsaturated fatty alcohols obtained by fat dissociation and reduction from natural raw materials and the synthetic fatty alcohols from the oxo process are of particular interest. The alkylene oxide adducts of these alcohols usually have average molecular weights Mₙ of from 200 to 5000.

As examples of the abovementioned aromatic alcohols, mention may be made of not only unsubstituted phenol and α- and β-naphthol but also the alkyl-substituted products which are, in particular, substituted by C₁-C₁₂-alkyl, preferably C₄-C₁₂- or C₁-C₄-alkyl, e.g. hexylphenol, heptylphenol, octylphenol, nonylphenol, isononylphenol, undecylphenol, dodecylphenol, dibutylphenol and tributylphenol and dinonylphenol, and also bisphenol A and its reaction products with styrene, especially bisphenol A substituted in the ortho positions relative to the two OH groups by a total of 4 phenyl-1-ethyl radicals.

Suitable aliphatic amines correspond to the abovementioned aliphatic alcohols. The saturated and unsaturated fatty amines which preferably have from 14 to 20 carbon atoms are also of particular importance here. Examples of aromatic amines are aniline and derivatives thereof.

Suitable aliphatic carboxylic acids are, in particular, saturated and unsaturated fatty acids which preferably comprise from 14 to 20 carbon atoms and hydrogenated, partially hydrogenated and unhydrogenated resin acids and also polybasic carboxylic acids, e.g. dicarboxylic acids such as maleic acid.

Suitable carboxamides are derived from these carboxylic acids.

Apart from the alkylene oxide adducts of the monofunctional amines and alcohols, the alkylene oxide adducts with at least bifunctional amines and alcohols are of very particular interest.

As at least bifunctional amines, preference is given to bifunctional to pentafunctional amines which correspond, in particular, to the formula H₂N-(R¹-NR₂)ₙ-H (R¹: C₂-C₆-alkylene; R²: hydrogen or C₁-C₆-alkyl; n: from 1 to 5). Specific examples are: ethylenediamine, diethylenetriamine, triethylenetetramine, tetraethylenepentamine, 1,3-propylenediamine, dipropylenetriamine, 3-amino-1-ethylenaminopropane, hexamethylenediamine, dihexamethylenetriamine, 1,6-bis(3-aminopropylamino)hexane and N-methyldipropylenetriamine, with hexamethylenediamine and diethylenetriamine being particularly preferred and ethylenediamine being very particularly preferred.

These amines are preferably firstly reacted with propylene oxide and subsequently with ethylene oxide. The ethylene oxide content of the block copolymers is usually from about 10 to 90% by weight.

The block copolymers based on polyfunctional amines generally have average molecular weights Mₙ of from 1000 to 40 000, preferably from 1500 to 30 000.

Bifunctional to pentafunctional alcohols are preferred as at least bifunctional alcohols. Examples which may be mentioned are C₂-C₆-alkylene glycols and the corresponding dialkylene and polyalkylene glycols, e.g. ethylene glycol, 1,2- and 1,3-propylene glycol, 1,2- and 1,4-butylene glycol, 1,6-hexylene glycol, dipropylene glycol and polyethylene glycol, glycerol and pentaerythritol, with ethylene glycol and polyethylene glycol being particularly preferred and propylene glycol and dipropylene glycol being very particularly preferred.

Particularly preferred alkylene oxide adducts of at least bifunctional alcohols have a central polypropylene oxide block, i.e. are derived from a propylene glycol or polypropylene glycol which is firstly reacted with further propylene oxide and then with ethylene oxide. The ethylene oxide content of the block copolymers is usually from 10 to 90% by weight.

The block copolymers based on polyhydric alcohols generally have average molecular weights Mₙ of from 1000 to 20 000, preferably from 1000 to 15 000.

Such alkylene oxide block copolymers are known and are commercially available, for example, under the names Tetronic^{®}, Pluronic^{®} and Pluriol^{®} (BASF) and also Atlas^{®} (Uniquema).

Of course, it is also possible to use mixtures of a plurality of surfactants.

Surfactants which display very little foaming are preferably selected.

If surfactants which display strong foaming are used, it is possible but less preferred to counter this property by use of antifoams.

Surfactant and polyacrylate are to be viewed as a system. They undergo an interaction which results in non-Newtonian properties. Within certain limits, surfactant and polyacrylate can either supplement or replace one another.

The amount of polyacrylate used in a polyacrylate/surfactant thickener system depends on the use. When the vapor space anticorrosive composition of the invention is used as engine running-in composition, the vapor space anticorrosive composition generally comprises from 0.0001 to 0.3% by weight of polyacrylate, preferably from 0.001 to 0.2% by weight, particularly preferably from 0.003 to 0.15% by weight, in particular from 0,004 to 0.03% by weight and very particularly preferably from 0,005 to 0,015% by weight.

In general, the vapor space anticorrosive composition comprises more parts by weight of polyacrylate than of surfactant. It is possible for the weight ratio of surfactant to polyacrylate to be 1:1, but it is typically from 1:2 to 1:100. In one embodiment, the ratio is from 1:5 to 1:40, and in another from 1:50 to 1:80.

Depending on their use, vapor space anticorrosive compositions according to the invention can comprise further constituents. These can be, for example, antifoams, dyes or markers,

Suitable thickeners are frequently completely water-dispersible or -soluble compounds.

According to the invention, it is possible to use only one type of thickener or mixtures of various thickeners.

The amount of thickener used depends on the use. When the vapor space anticorrosive compositions are used as engine running-in compositions, the vapor space anticorrosive composition generally comprises from 0.0001to 0.3% by weight of thickener, preferably from 0.001 to 0.2% by weight, particularly preferably from 0.003 to 0.15% by weight, in particular from 0.004 to 0.03% by weight and very particularly preferably from 0.005 to 0.015% by weight.

Vapor space anticorrosive compositions according to the invention have, for example, viscosities (determined as specified in ASTM D 4016-08 at a temperature of 0°C) of from 5 to 2000 mPas, preferably from 10 to 1000 mPas, particularly preferably from ≥ 25 to 750 mPas. In some embodiments, vapor space anticorrosive compositions according to the invention have viscosities of from 50 to 500 mPas.

The vapor space anticorrosive compositions according to the invention have non-Newtonian properties. Non-Newtonian liquids have, at constant temperature, different viscosities at different shear stresses. For example, the dynamic viscosity determined as specified in ASTM D 4016-08 can differ by at least 20% at different spindle speeds. This phenomenon is also referred to as pseudoplasticity.

Vapor space anticorrosive compositions according to the invention having non-Newtonian properties generally have viscosities at 0°C of from 5 to 1000 mPas at a shear stress corresponding to 12 spindle revolutions per minute. The dynamic viscosity is preferably from 10 to 500 mPas, particularly preferably from 20 to 400 mPas. (Dynamic viscosity determined as specified in ASTM D 4016-08, Brookfield LV DV III+ viscometer having a small sample adapter and a type SC4-34 spindle).

The dynamic viscosity of the vapor space anticorrosive composition having non-Newtonian properties at a high shear stress is below that at a lower shear stress.

For example, the dynamic viscosity measured by a method analogous to ASTM D 4016-08 on a Brookfield viscometer at a stirrer speed of 30 revolutions per minute can be at least 5% below that at a stirrer speed of 12 rpm under otherwise identical boundary conditions. The viscosity at the higher shear stress mentioned is preferably at least 10% below that at a lower shear stress, particularly preferably at least 20%, in particular at least 50%.

At 0°C and energy inputs corresponding to 12 and 30 spindle revolutions (Brookfield LV DV III+ viscometer with small sample adapter and a type SC4-34 spindle, analogous to ASTM D 4016-08), the difference in the viscosity is generally at least 1 mPas, preferably at least 2 mPas, particularly preferably at least 5 mPas and in particular at least 10 mPas. In one embodiment, the difference in the viscosities is at least 15 mPas.

The difference in the viscosities at different shear stresses depends, inter alia, on the temperature and on the two shear rates at which the viscosity is measured.

In general, the difference in the viscosity is greater, the greater the difference in the shear stresses.

According to the invention the thickener having non-Newtonian properties comprises at least one polyacrylate and at least one surfactant.

The constituents mentioned are frequently dissolved or dispersed in one or more solvents such as water, alcohols, glycols, polyalkylene glycols. In many cases, these solvents make up the major proportion by weight of the vapor space anticorrosive composition.

Particularly when the vapor space anticorrosive compositions of the invention are used as coolant or as engine running-in composition, they comprise a large proportion of water, glycols such as ethylene glycol, diethylene glycol, triethylene glycol, polyethylene glycol, propylene glycol, dipropylene glycol, tripropylene glycol, monoalcohols such as ethanol, isopropanol, n-propanol, tert-butanol, isobutanol, n-butanol, pentanol, polyalkylene glycols such as polyethylene glycols which can optionally be etherified at one end.

It is possible to add all or part of the water and/or alcohols to the mixture only immediately before use. In this case, concentrates which naturally can have proportions by weight of corrosion inhibitors and thickeners which are orders of magnitude higher are present beforehand.

If the vapor space anticorrosive compositions of the invention comprise water, this can have a neutral, acidic or basic pH. The pH of the mixture is frequently set to a slightly basic value at the end. Typical vapor space anticorrosive compositions have a pH of from 7 to 10, preferably from 7.5 to 9.5, particularly preferably from 8 to 9.

In an embodiment of the invention, vapor space anticorrosive compositions according to the invention have thixotropic properties, i.e. their viscosity alters during application of shear stress. For example, it is possible for the viscosity of a vapor space anticorrosive composition to decrease under shear stress only after some time, for example after a few seconds to minutes.

In an embodiment of the invention, vapor space anticorrosive compositions according to the invention comprise from 0 to 4% by weight of a triazole such as tolutriazole, from 0 to 5% by weight of a benzoate such as sodium benzoate, from 0 to 5% by weight of a carboxylic acid or dicarboxylic acid such as dodecanedicarboxylic acid as corrosion inhibitors, with the proviso that the vapor space anticorrosive composition comprises a total of at least 0.5% by weight of corrosion inhibitor. Furthermore, vapor space anticorrosive compositions of this embodiment comprise from 0 to 0.01% by weight of an antifoam, from 0.0001 to 0.3% by weight of a thickener based on a polyacrylate, from 0 to 0.03% by weight of a nonionic surfactant and from 0.01 to 5% by weight of a castor oil ethoxylate, from 0 to 10% by weight of triethanolamine, from 0 to 2% by weight of a carboxylic acid such as a phthalic anhydride, from 0 to 5% by weight of a further carboxylic acid such as isononanoic acid, from 20 to 80% by weight of monopropylene glycol and also potassium hydroxide to adjust the pH of the vapor space anticorrosive composition to from 8 to 10. Furthermore, the vapor space anticorrosive composition comprises water. The mixture obtained in this way can be diluted with water for use and to the desired viscosity for storage and the desired freezing point (freezing protection) can be set.

In another embodiment of the invention, vapor space anticorrosive compositions according to the invention comprise from 0.001 to 3% by weight of a triazole such as tolutriazole, from 0.05 to 4% by weight of a benzoate such as sodium benzoate, from 0.05 to 4% by weight of a carboxylic acid or dicarboxylic acid such as dodecanedicarboxylic acid as corrosion inhibitors. Furthermore, vapor space anticorrosive compositions of this embodiment comprise from 0.001 to 0.002% by weight of an antifoam, from 0.001 to 0.2% by weight of a thickener based on a polyacrylate, from 0 to 0.02% by weight of a nonionic surfactant and from 0.02 to 4% by weight of a castor oil ethoxylate, from 0 to 5% by weight of triethanolamine, from 0.01 to 1%by weight of a carboxylic acid such as phthalic anhydride, from 0.05 to 4% by weight of a further carboxylic acid such as isononanoic acid, from 25 to 70% by weight of monopropylene glycol and also potassium hydroxide to adjust the pH of the vapor space anticorrosive composition to from 7 to 10. Furthermore, the vapor space anticorrosive composition comprises water. The mixture obtained in this way can be diluted with water for use and to the desired freezing point for storage.

In another embodiment of the invention, vapor space anticorrosive compositions according to the invention comprise from 0.01 to 2.5% by weight of a triazole such as tolutriazole, from 0.1 to 2.5% by weight of a benzoate such as sodium benzoate, from 0.1 to 2.5% by weight of a carboxylic acid or dicarboxylic acid such as dodecanedioic acid as corrosion inhibitors. Furthermore, vapor space anticorrosive compositions of this embodiment comprise from 0.001 to 0.002% by weight of an antifoam, from 0.003 to 0.15% by weight of a thickener based on a polyacrylate, from 0.003 to 0.15% by weight of a nonionic surfactant and from 0.05 to 3% by weight of a castor oil ethoxylate, from 0.5 to 4% by weight of triethanolamine, from 0.02 to 0.5% by weight of a carboxylic acid such as phthalic anhydride, from 0.1 to 2.5% by weight of a further carboxylic acid such as isononanoic acid, from 30 to 60% by weight of monopropylene glycol and potassium hydroxide to adjust the pH of the vapor space anticorrosive composition to from 7 to 10. Furthermore, the vapor space anticorrosive composition comprises water. The mixture obtained in this way can be diluted with water for use and to the desired freezing point for storage.

In another embodiment of the invention, vapor space anticorrosive compositions according to the invention comprise from 0.03 to 1% by weight of a triazole such as tolutriazole, from 0.2 to 1.0% by weight of a benzoate such as sodium benzoate, from 0.2 to 1.0% by weight of a carboxylic acid or dicarboxylic acid such as dodecanedioic acid as corrosion inhibitors. Furthermore, vapor space anticorrosive compositions of this embodiment comprise from 0.001 to 0.002% by weight of an antifoam, from 0.004 to 0.03% by weight of a thickener based on a polyacrylate, from 0.0005 to 0.002% by weight of a nonionic surfactant and from 0.1 to 1%by weight of a castor oil ethoxylate, from 1.0 to 3.0% by weight of triethanolamine, from 0.03 to 0.3% by weight of a carboxylic acid such as phthalic anhydride, from 0.8 to 2.0% by weight of a further carboxylic acid such as isononanoic acid, from 35 to 50% by weight of monopropylene glycol and potassium hydroxide to adjust the pH of the vapor space anticorrosive composition to from 7 to 10. Furthermore, the vapor space anticorrosive composition comprises water. The mixture obtained in this way can be diluted with water for use and to the desired freezing point for storage.

In another embodiment of the invention, vapor space anticorrosive compositions according to the invention comprise from 0.05 to 0.15% by weight of a triazole such as tolutriazole, from 0.4 to 0.6% by weight of a benzoate such as sodium benzoate, from 0.4 to 0.6% by weight of a carboxylic acid or dicarboxylic acid such as dodecanedioic acid as corrosion inhibitors. Furthermore, vapor space anticorrosive compositions of this embodiment comprise from 0.001 to 0.002% by weight of an antifoam, from 0.005 to 0.015% by weight of a thickener based on a polyacrylate, from 0.0005 to 0.0015% by weight of a nonionic surfactant and from 0.2 to 0.4% by weight of a castor oil ethoxylate, from 1.5 to 2.0% by weight of triethanolamine, from 0.05 to 0.2% by weight of a carboxylic acid such as phthalic anhydride, from 1.1 to 21.5% by weight of a further carboxylic acid such as isononanoic acid, from 38 to 45% by weight of monopropylene glycol and potassium hydroxide to adjust the pH of the vapor space anticorrosive composition to from 7 to 10. Furthermore, the vapor space anticorrosive composition comprises water. The mixture obtained in this way can be diluted with water for use and to the desired freezing point for storage.

Vapor space anticorrosive compositions according to the invention are suitable, inter alia, as anticorrosive compositions for metal objects. They are suitable for all metals or alloys used industrially e.g. copper, brass, soft solder, steel, magnesium or aluminum. In particular, vapor space anticorrosive compositions according to the invention display vapor-phase corrosion-inhibiting properties.

In a preferred embodiment, they are used as coolant which additionally has corrosion-inhibiting properties.

Vapor space anticorrosive compositions according to the invention are suitable for corrosion protection of objects from all fields of technology, for example chemistry, chemical process engineering, vehicle construction, food technology, electrical engineering.

They are particularly suitable for all objects which have a hollow space.

In a preferred embodiment, they are used as engine running-in compositions, particularly preferably in the case of internal combustion engines such as spark ignition engines, diesel engines, Wankel engines, turbines.

Vapor space anticorrosive compositions according to the invention are also suitable for corrosion protection of all objects which are not continually in use. During periods in which they are not used, these objects are frequently exposed to air, water and weathering and corrode.

Furthermore, vapor space anticorrosive compositions according to the invention are suitable for all apparatuses having mechanically moving parts.

Examples are pumps, mechanical conveyors, extruders, medical instruments, fountains, ice machines, brakes.

### Experimental part

### Example 1: Vapor space anticorrosive composition according to the invention

| **Constituent** | **Proportio n [% by wt.]** |
|---|---|
| Triethanolamine | 1.75 |
| Phthalic anhydride | 0.129 |
| Potassium hydroxide, 48% in water | 1.60 |
| Monopropylene glycol | 40.4 |
| Isononanoic acid | 1.30 |
| Tolutriazole | 0.10 |
| Sodium benzoate | 0.50 |
| Dodecanedioic acid | 0.50 |
| Block copolymer comprising a central polypropylene block having an average mass of 3250 g/mol and at each end a block of polyethylene oxide and having an average proportion of polyethylene oxide of 10% by weight in the molecule (Pluronic PE 10100) | 0.0015 |
| Anionic polyacrylate, pulverulent, synthetic thickener for pigment printing having a pH as 1% strength solution in water of 6 and a solubility in water of > 100g/l at 20°C (Lutexal^{®} GP Eco) | 0.010 |
| Nonionic surfactant based on an ethoxylate of a branched C13-oxo alcohol having about 3 ethylene oxide groups per mol (Lutensol^{®} TO 3) | 0.001 |
| Ethoxylated castor oil (C16-C18, average degree of ethoxylation of from 5 to 60 EO) having a pH as 1% strength solution in water of 6.3 (Leunapon^{®} ER 40) | 0.300 |
| Water | Balance |

### Example 2: Engine running-in composition (comparison)

| **Constituent** | **Proportion [% by wt.]** |
|---|---|
| Triethanolamine | 1.75 |
| Phthalic anhydride | 0.129 |
| Potassium hydroxide, 48% in water | 1.60 |
| Monopropylene glycol | 0.367 |
| Isononanoic acid | 1.30 |
| Benzotriazole | 0.05 |
| Tolutriazole | 0.05 |
| Sodium benzoate | 0.50 |
| Dodecanedioic acid | 0.50 |
| Block copolymer comprising a central polypropylene block having an average mass of 3250 g/mol and at each end a block of polyethylene oxide and having an average proportion of polyethylene oxide of 10% by weight in the molecule (Pluronic PE 10100) | 0.0015 |
| Water | Balance |

### Example 3: Engine running-in composition (comparison)

| **Constituent** | **Proportion [% by wt.]** |
|---|---|
| Triethanolamine | 1.75 |
| Phthalic anhydride | 0.129 |
| Potassium hydroxide, 48% in water | 1.60 |
| Monopropylene glycol | 40.4 |
| Isononanoic acid | 1.30 |
| Benzotriazole | 0.05 |
| Tolutriazole | 0.05 |
| Sodium benzoate | 0.50 |
| Dodecanedioic acid | 0.50 |
| Block copolymer comprising a central polypropylene block having an average mass of 3250 g/mol and at each end a block of polyethylene oxide and having an average proportion of polyethylene oxide of 10% by weight in the molecule (Pluronic PE 10100) | 0.0015 |
| Anionic polyacrylate, pulverulent, synthetic thickener for pigment printing having a pH as 1% strength solution in water of 6 and a solubility in water of > 100g/l at 20°C (Lutexal^{®} GP Eco) | 0.05 |
| Nonionic surfactant based on an ethoxylate of a branched C13-oxo alcohol having about 3 ethylene oxide groups per mol (Lutensol^{®} TO 3) | 0.005 |
| Castor oil | 0.001 |
| Glycerol | 0.369 |
| Water | Balance |

### Example 4: Engine running-in composition (comparison)

| **Constituent** | **Proportion [% by wt.]** |
|---|---|
| Triethanolamine | 1.75 |
| Phthalic anhydride | 0.129 |
| Potassium hydroxide, 48% in water | 1.60 |
| Monopropylene glycol | 0.369 |
| Isononanoic acid | 1.30 |
| Benzotriazole | 0.05 |
| Tolutriazole | 0.05 |
| Sodium benzoate | 0.50 |
| Dodecanedioic acid | 0.50 |
| Block copolymer comprising a central polypropylene block having an average mass of 3250 g/mol and at each end a block of polyethylene oxide and having an average proportion of polyethylene oxide of 10% by weight in the molecule (Pluronic PE 10100) | 0.0015 |
| Ethoxylated castor oil (C16 - C18, average degree of ethoxylation from 5 to 60 EO) having a pH as 1%strength solution in water of 6.3 (Leunapon^{®} ER 40) | 0.50 |
| Water | Balance |

### Example 5: Engine running-in composition (comparison)

| **Constituent** | **Proportion [% by wt.]** |
|---|---|
| Triethanolamine | 42.00 |
| Tolutriazole | 0.72 |
| Water | Balance |

### Example 6: Engine running-in composition (comparison)

| **Constituent** | **Proportion [% by wt.]** |
|---|---|
| Triethanolamine | 1.700 |
| Tolutriazole | 0.034 |
| Water | Balance |

### Example 7: Viscosity measurements

The dynamic viscosity of the vapor space anticorrosive composition from example 1 was measured at different spindle speeds and different temperatures by a method analogous to ASTM D 4016-08 using a Brookfield LV DV III+ instrument with a small sample adapter and a type SC4-34 spindle. The measurements were carried out as described in "Viskositätsmessungen mit Brookfield, Brookfield Engineering Labs. Vertriebs GmbH 9/99".

Here, the vapor space anticorrosive composition from example 1 was measured both as concentrate and diluted with water in a ratio of 1:1.

The result is shown in the following table.

| | Example 1 | Concentrate for example 1 | Example 1 | Concentrate for example 1 |
|---|---|---|---|---|
| Spindle | 34 | 34 | 34 | 34 |
| Temperature | -10°C | -10°C | 0°C | 0°C |
| Spindle revolutions 12 rpm | 75 - 85 mPas | 905 - 910 mPas | 25-30 mPas | 355 - 360 mPas |
| Spindle revolutions 30 rpm | 28-30 mPas | 870 - 880 mPas | 14 - 16 mPas | 332 - 334 mPas |

### Example 8: Evaluation of the vapor space anticorrosive compositions in the hot and humid chamber test using a method based on DIN 50017

Test plates made of CK 15 (an iron material (structural steel) having the material number 1.1141 in accordance with DIN 17210) and having a size of 100 x 50 x 3 mm were cleaned and degreased by means of acetone. They were subsequently polished by means of a textile roll on a grinding machine. They were subsequently cleaned again with a cloth moistened with acetone.

A hot and humid chamber model KB 300 from Liebisch (model No. 43046101) was cleaned and filled with 4000 ml of twice-distilled water.

The test plates were stood in 400 ml glass beakers, completely covered with the vapor space anticorrosive compositions to be tested and the glass beakers were each covered with a clock glass.

The vapor space anticorrosive compositions were heated to boiling with the test plates in the glass beaker and subsequently allowed to cool covered for one hour.

After cooling, the plates were taken from the vapor space anticorrosive compositions and hung up to dry.

The test plates were subsequently suspended in the hot and humid chamber and subjected to the following conditions:
A cycle comprised 8 hours at 40°C and 16 hours at room temperature and 100% relative atmospheric humidity.

Five cycles were carried out in succession.

The test plates were subsequently taken out, dried and evaluated.

Here, the plates were compared visually relative to one another according to the degree of corrosion. Here, 1 is the best evaluation (no corrosion) and 4 is the worst (severe corrosion).

| Vapor space anticorrosive composition according to Example No. | Evaluation |
|---|---|
| 1 | 1 |
| 2 | 2 |
| 3 | 2 |
| 4 | 3 |
| 5 | 4 |
| 6 | 4 |

### Example 9: Evaluation of the vapor space anticorrosive compositions in the sandwich corrosion test using a method based on ASTM F 1110

Test plates made of structural steel CK 15 and having a size of 100 x 50 x 3 mm were cleaned and degreased by means of acetone. They were subsequently polished by means of a textile roll on a grinding machine. They were subsequently cleaned again with a cloth moistened with acetone.

Two test plates were heated to boiling with 900 ml of the vapor space anticorrosive composition to be tested and subsequently allowed to stand in the test medium without further heat input for one hour. The test plates were subsequently hung up to dry.

A filter paper strip (white band, dimensions 10 x 40 mm) was wetted with twice-distilled water and laid centrally between the two test plates so that there was a distance of about 1 cm between the filter paper and the lower edge of the metal. The two test plates with the filter paper had adhesive tape wrapped centrally around them and were fixed in this way.

The test plates were suspended over a dish with twice-distilled water in a glass desiccator in such a way that they were in contact with the water and dipped into the water to a depth of about 2 mm. The desiccator was closed so as to be airtight and stored at 40°C in a drying oven for five days.

The test plates were subsequently taken out, rinsed with water, dipped in acetone and allowed to dry.

The test plates were compared visually relative to one another according to the degree of corrosion. Here, 1 is the best evaluation (no corrosion) and 4 is the worst (corrosion over the entire area).

| Vapor space anticorrosive composition according to Example No. | Evaluation |
|---|---|
| 1 | 1 |
| 2 | 3 |
| 3 | 2 |
| 4 | 2 |
| 5 | 4 |
| 6 | 4 |

### Example 10: Evaluation of the vapor space anticorrosive compositions in the corrosion test on a cast engine component

A sand-blasted engine head made of gray cast iron (cast iron material having the material number 0.6035 in accordance with DIN EN 1561) was heated to boiling in about 1000 ml of vapor space anticorrosive composition and subsequently allowed to stand without further heat input for one hour.

The plate was taken from the vapor space anticorrosive composition and heat-sealed so as to be airtight in a plastic bag made of LD polyethylene.

The bag was stored at room temperature for four weeks. The plate was taken out, rinsed with water, dipped in acetone and dried.

The plates were compared visually relative to one another according to the degree of corrosion. Here, 1 is the best evaluation (no corrosion) and 4 is the worst (corrosion over the full area).

| Vapor space anticorrosive composition according to Example No. | Evaluation |
|---|---|
| 1 | 1 |
| 2 | 3 |
| 3 | 2 |
| 4 | 2 |

### Example 11: Evaluation of the vapor space anticorrosive composition in the corrosion test

Two cast iron test plates made of GG 25 (cast iron material having the material number 0.6025 in accordance with DIN EN 1561) and having the dimensions 50 mm x 25 mm x 3 mm were cleaned with acetone and immersed completely in vapor space anticorrosive composition according to examples 1 and 2 in a screw cap container.

The screw cap containers were stored at 90°C in a drying oven for one hour. The test plates were subsequently evaluated visually for degree of corrosion

| Vapor space anticorrosive composition according to Example No. | Evaluation after 1 h at 90°C |
|---|---|
| 1 | 1 |
| 2 | 1 |

About 80% of the liquid was removed from the screw cap containers so that a major part of the test plates was not immersed. The containers were stored at room temperature for one hour. The containers were subsequently stored at 60°C in a drying oven for one hour and evaluated again:

| Vapor space anticorrosive composition according to Example No. | Evaluation after 1 h at 60°C |
|---|---|
| 1 | 1 |
| 2 | 3 |

The containers were subsequently stored at 80°C in a drying oven for one hour and evaluated again:

| Vapor space anticorrosive composition according to Example No. | Evaluation after 1 h at 80°C |
|---|---|
| 1 | 1 |
| 2 | 4 |

## Claims

1. An aqueous vapor space anticorrosive composition comprising at least one ethoxylate of castor oil as a corrosion inhibitor and at least one thickener, wherein the vapor space anticorrosive composition has non-Newtonian properties and
wherein the thickener comprises at least one polyacrylate and at least one surfactant.

2. The aqueous vapor space anticorrosive composition according to claim 1, wherein the vapor space anticorrosive composition has thixotropic properties.

3. The aqueous vapor space anticorrosive composition according to at least one of the preceding claims, wherein the dynamic viscosity of the vapor space anticorrosive composition determined as specified in ASTM D 4016-08 at a temperature of 0°C differs by at least 1 mPas at spindle speeds of 12 and 30 revolutions per minute.

4. The aqueous vapor space anticorrosive composition according to at least one of the preceding claims, wherein the dynamic viscosity of the vapor space anticorrosive composition determined as specified in ASTM D 4016-08 at a temperature of 0°C differs by at least 5% at spindle speeds of 12 and 30 revolutions per minute.

5. The aqueous vapor space anticorrosive composition according to at least one of the preceding claims, wherein all constituents are present in a single phase below a phase inversion temperature T_{P} and form a second liquid phase above the phase inversion temperature Tp.

6. The aqueous vapor space anticorrosive composition according to claim 5, wherein the phase inversion temperature T_{P} is from 50 to 100°C.

7. The use of aqueous vapor space anticorrosive compositions according to at least one of the preceding claims as engine run-in compositions.

8. The use of aqueous vapor space anticorrosive compositions according to at least one of the preceding claims in a coolant.

## Patentansprüche

1. Wässriges Dampfraumkorrosionsschutzmittel, enthaltend mindestens ein Ethoxylat von Ricinusöl als Korrosionsinhibitoren und mindestens einen Verdicker, wobei das Dampfraumkorrosionsschutzmittel nicht-Newtonsche Eigenschaften hat und wobei der Verdicker mindestens ein Polyacrylat und mindestens ein Tensid enthält.

2. Wässriges Dampfraumkorrosionsschutzmittel nach Anspruch 1, wobei das Dampfraumkorrosionsschutzmittel thixotrope Eigenschaften hat.

3. Wässriges Dampfraumkorrosionsschutzmittel nach mindestens einem der vorhergehenden Ansprüche, wobei die dynamische Viskosität des Dampfraumkorrosionsschutzmittels, bestimmt wie in ASTM D 4016-08 bei einer Temperatur von 0 °C, sich bei Spindelgeschwindigkeiten von 12 und 30 Umdrehungen/min um mindestens 1 mPas unterscheidet.

4. Wässriges Dampfraumkorrosionsschutzmittel nach mindestens einem der vorhergehenden Ansprüche, wobei die dynamische Viskosität des Dampfraumkorrosionsschutzmittels, bestimmt wie in ASTM D 4016-08 bei einer Temperatur von 0 °C, sich bei Spindelgeschwindigkeiten von 12 und 30 Umdrehungen/min um mindestens 5 % unterscheidet.

5. Wässriges Dampfraumkorrosionsschutzmittel nach mindestens einem der vorhergehenden Ansprüche, wobei unterhalb einer Phaseninversionstemperatur T_{P} alle Bestandteile in einer Phase vorliegen und oberhalb der Phaseninversionstemperatur T_{P}eine zweite flüssige Phase ausbilden.

6. Wässriges Dampfraumkorrosionsschutzmittel nach Anspruch 5, wobei die Phaseninversionstemperatur T_{P} 50 bis 100 °C beträgt.

7. Verwendung von wässrigen Dampfraumkorrosionsschutzmitteln nach mindestens einem der vorhergehenden Ansprüche als Motoreneinlaufmittel.

8. Verwendung von wässrigen Dampfraumkorrosionsschutzmitteln nach mindestens einem der vorhergehenden Ansprüche in einem Kühlmittel.

## Revendications

1. Composition aqueuse anticorrosive d'espace vapeur comprenant au moins un éthoxylate d'huile de ricin en tant qu'inhibiteur de corrosion et au moins un épaississant, la composition anticorrosive d'espace vapeur possédant des propriétés non newtoniennes et l'épaississant comprenant au moins un polyacrylate et au moins un tensioactif.

2. Composition aqueuse anticorrosive d'espace vapeur selon la revendication 1, la composition anticorrosive d'espace vapeur possédant des propriétés thixotropiques.

3. Composition aqueuse anticorrosive d'espace vapeur selon au moins l'une des revendications précédentes, la viscosité dynamique de la composition anticorrosive d'espace vapeur déterminée tel que spécifié dans la norme ASTM D4016-08 à une température de 0 °C différant d'au moins 1 mPas à des vitesses de broche de 12 et 30 tours par minute.

4. Composition aqueuse anticorrosive d'espace vapeur selon au moins l'une des revendications précédentes, la viscosité dynamique de la composition anticorrosive d'espace vapeur déterminée tel que spécifié dans la norme ASTM D4016-08 à une température de 0 °C différant d'au moins 5 % à des vitesses de broche de 12 et 30 tours par minute.

5. Composition aqueuse anticorrosive d'espace vapeur selon au moins l'une des revendications précédentes, tous les constituants étant présents dans une unique phase en dessous d'une température d'inversion de phases T_{P} et formant une deuxième phase liquide au-dessus de la température d'inversion de phases T_{P}.

6. Composition aqueuse anticorrosive d'espace vapeur selon la revendication 5, la température d'inversion de phases T_{P}étant de 50 à 100 °C.

7. Utilisation de compositions aqueuses anticorrosives d'espace vapeur selon au moins l'une des revendications précédentes en tant que compositions de rodage de moteur.

8. Utilisation de compositions aqueuses anticorrosives d'espace vapeur selon au moins l'une des revendications précédentes dans un liquide de refroidissement.
